# EUROPÄISCHE PATENTANMELDUNG

(11) **EP 0 907 299 A2**
(43) Veröffentlichungstag der Anmeldung: **07.04.1999**
(21) Anmeldenummer: 98116623.4
(22) Anmeldetag: 02.09.1998
(51) Int. Cl.: H04Q 11/04

(54) **Verfahren zum Betrieb von programmgesteuerten Kommunikationseinrichtungen**

(30) Priorität: 16.09.1997 DE 19740740
(71) Anmelder: SIEMENS AKTIENGESELLSCHAFT, 80333 München (DE)
(72) Erfinder: Schönfeld, Norbert, 44145 Dortmund (DE)

(57) **Zusammenfassung**

Die Kommunikationseinrichtungen (KS-A;KS-B), die bestimmte Endeinrichtungen an einem Hauptanschluss bzw. Kommunikationssysteme darstellen können, sind über eine Verbindungsleitung (AL) mit zugrundeliegenden digitalem Protokoll (ISDN-Kommunikationsverbindung) verbindbar. In der Ursprungskommunikationseinrichtung (KS-A) sind besondere Ziffernkombinationen (ZK1 bis Zkn bzw. ZK11 bis ZK1m) eingebbar. Dies kann zum Beispiel durch einen betriebstechnischen Eintrag oder durch einen vom Teilnehmer aktuell vorgenommenen Eintrag erfolgen. Aufgrund einer vom Benutzer vorgenommenen spezifischen Diensteprozedur wird eine von ihm mittelbar oder unmittelbar bestimmte Ziffernkombination im Rahmen des dem Verbindungsaufbau zugrundeliegenden Protokolls automatisch zu einer Zielkommunikationseinrichtung (KS-B) übertragen. In dieser sind vorab diese einzelnen Ziffernkombinationen abgespeichert, wobei einer jeden Ziffernkombination ein durch sie jeweils definierter unterschiedlicher Funktionsablauf fest zugeordnet ist. Die im digitalen Protokoll übermittelte Ziffernkombination wird auf Übereinstimmung mit den in der Zielkommunikationseinrichtung abgespeicherten Ziffernkombinationen überprüft. Wird eine Übereinstimmung festgestellt, so wird der jeweils zugeordnete Funktionsablauf bewirkt. Dies können benutzerorientierte Abläufe (Anzeige von Displaytexten als Information) oder einrichtungs- bzw. systemorientierte Aktionen (Ein- bzw. Ausschalten.von Verbrauchern wie Warnanlage, Rollladensteuerung, Heizung usw.; Einschalten eines PC's) darstellen.

## Beschreibung

Die Erfindung betrifft ein Verfahren zum Betrieb von programmgesteuerten Kommunikationseinrichtungen, die über eine neben wenigstens einen Sprachkanal einen Datenkanal unterstützende Schnittstelle als Ursprung bzw. Ziel einer Kommunikationsverbindung aufgrund der Eingaben eines Benutzers über eine Anschlussleitung verbindbar sind. Im Zusammenhang mit dem Aufbau der Kommunikationsverbindung wird dabei unabhängig von der eigentlichen Wahlinformation eine vorbestimmte Ursprungsziffernfolge als Teil des Übertragungsprotokolls automatisch zur Zielkommunikationseinrichtung übermittelt. In diesem zugrundeliegenden ditialen Protokoll wird üblicherweise als Ursprungsziffernfolge die vollständige Rufnummer eines rufenden Teilnehmers zum gewünschten Ziel übertragen. Damit besteht beispielsweise die Möglichkeit, diese Rufnummer - wie dies z.B. bei einer sogenannten ISDN-Verbindung der Fall ist - vor der Durchschaltung einer Verbindung an einer Anzeigeeinrichtung anzuzeigen. Es ist auch bekannt, dass nach der Aktivierung einer bestimmten Prozedur von einem Fernsprechendgerät eines ersten Kommunikationssystems unmittelbar für ein zweites Zielkommunikationssystem eine Fernverwaltung bzw. Fernprogrammierung erfolgen kann. Die betriebstechnischen Aufträge werden dabei über eine Modem-Schnittstelle in das Leitungsnetz eingespeist, über das eine Verbindung zu dem betreffenden Zielkommunikationssystem herstellbar ist. Im Zusammenhang mit einer solchen Fernprogrammierung ist es auch möglich, dass ein berechtigter Anwender eine festgelegte Rufnummer eines Teilnehmers des Zielkommunikationssystems anwählt und mittels Mehrfrequenzcodewahl einen Ziffernstring an dieses Zielkommunikationssystem sendet. Ein derartiger Zugriff kann demnach nur gebührenpflichtig durchgeführt werden. Ein Schutz gegen einen unberechtigten Zugriff ist nur durch die Eingabe sogenannter 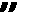 Passwörter" möglich.

Es ist die Aufgabe der Erfindung, bei einer nicht dem Kommunikationsdienst 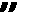 Sprache" dienenden Verbindung auf der Basis eines digitalen Protokolls, die Betriebsweise zu verbessern.

Diese Aufgabe wird ausgehend von den im Oberbegriff des Patentanspruchs 1 angegebenen Merkmalen durch dessen kennzeichnende Merkmale gelöst. Das Wesentliche der Erfindung besteht darin, daß grundsätzlich frei bestimmbare besondere Ziffernkombinationen in der Ursprungskommunikationseinrichtung eingebbar sind. Jede Ziffernkombination kann nach der z.B. durch einen Servicetechniker erfolgenden Eingabe dauerhaft abgespeichert werden, oder sie kann auch eine vom Teilnehmer aktuell eingegebene Ziffernkombination darstellen. Aufgrund einer vom Benutzer vorgenommenen spezifischen Diensteprozedur wird die besondere Ziffernkombination zusätzlich oder anstelle der Anschlussrufnummer des jeweiligen Benutzers im Rahmen des einem Verbindungsaufbau zugrundeliegenden Protokolls automatisch im Sinne einer Ursprungsziffernkombination zu einer Zielkommunikationseinrichtung übertragen. In dieser ist jede dieser vorbestimmten besonderen Ziffernkombinationen ebenfalls abgespeichert, und es ist ein jeweils durch sie definierter Funktionsablauf fest zugeordnet. Jede bei einem vorgenommenen Verbindungsaufbau im Zusammenhang mit der vom Benutzer eingegebenen spezifischen Diensteprozedur übermittelte besondere Ziffernkombination wird daraufhin geprüft, ob sie mit einer der in der Zielkommunikationseinrichtung abgespeicherten besonderen Ziffernkotrbinationen übereinstimmt. Ist dies der Fall, so wird der jeweils zugeordnete Funktionsablauf bewirkt. Es können somit in einfacher Weise unterschiedliche Funktionsabläufe in einer Zielkommunikationseinrichtung über eine externe Verbindung eingeleitet werden. Diese Einleitung von Funktionsabläufen kann ohne Gebührenberechnung erfolgen, da eine Verbindungsdurchschaltung zu einem Endgerät nicht erfolgt. Es wird lediglich unabhängig von der Notwendigkeit eines 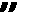 Meldens" die bei der Anwahl einer gewünschten Zielkommunikationseinrichtung zusätzlich übermittelte besondere Ziffernkombination ausgewertet. Die Möglichkeit einer missbräuchlichen Aktivierung wird minimiert, da in den Fällen, in denen die besondere Ziffernkombination als Nummernanteil die Ortskennzahl sowie einen weiteren, den Ursprung ohne Durchwahlinformation kennzeichnenden Nummernteil enthält, durch das öffentliche Amt, z.B. einer ISDN-Verbindung, grundsätzlich eine Plausibilitätsprüfung vorgenommen wird.

Abhängig von der Art der Zielkommunikationseinrichtung sind darin unterschiedliche Funktionsabläufe, die jeweils fest an bestimmte Ziffernkombinationen gekoppelt sind, festzulegen. Diese Abläufe können benutzerorientierte und/oder einrichtungsorientierte Aktionen repräsentieren. Ebenso können beispielsweise dadurch Textinformationen an einem Endgerät angezeigt werden, oder es sind damit grundsätzlich unterschiedliche Leistungsmerkmale zu aktivieren bzw. zu deaktivieren. Ein besondere Vorteil ergibt sich dann, wenn als einrichtungsorientierte Aktion ein oder mehrere Relais in der Zielkommunikationseinrichtung aktiviert werden. Über deren Sekundärkreis können bezüglich bestimmter Verbraucher bzw. bezüglich bestimmter Gerätearten Steuerfunktionen bewirkt werden. Beispiele hierfür sind das Aktivieren bzw. Deaktivieren von Alarmanlagen, die Betätigung einer Rollladensteuerung, das Schalten von Lichtquellen und das Schalten eines PC's. Damit ergibt sich dann beispielsweise grundsätzlich die Möglichkeit, Windows-Applikationen aus der Ferne zu starten.

Als Ziel- bzw. Ursprungskommunikationseinrichtung kann eine an einen Einzelanschluss mit digitalem Protokoll gekoppelte Endeinrichtung oder eine derartige Endeinrichtung und ein privates Kommunikationssystem mit entsprechenden daran angeschlossenen Endgeräten dienen. Sie können aber auch jeweils ein Kommunikationssystem darstellen. Eine vorteilhafte Anwendung insbesondere im Hinblick auf die Steuerung von Verbrauchern und Geräten ergibt sich dann, wenn als Ziel des Kommunikationssystems ein sogenanntes kleines Kommunikationssystem (Heimkommunikationssystem) dient. Bei Verwendung von Endeinrichtungen eines Einzelanschlusses mit digitalem Protokoll wie zum Beispiel Endeinrichtungen, die an einem sogenannten SO-Bus anschaltbar sind, müssen die notwendigen programmtechnischen Ausgestaltungen entsprechend angeboten werden.

Für die Einleitung eines Funktionsablaufes an einer fernen Zielstelle ist erfindungsgemäß vorgesehen, dass die einzelnen besonderen Ziffernkombinationen insbesondere bei einem Kommunikationssystem als Ursprungskommunikationseinrichtung, zum Beispiel im Rahmen von betriebstechnischen Eingaben dauerhaft abgespeichert sind. Der einer jeden Ziffernkombination zugeordnete Funktionsablauf wird im Sinne einer aufrufbaren Menüfunktion nacheinander auf einer Anzeigeeinrichtung für den Benutzer im Klartext benannt. Bei Betätigung einer Bestätigungstaste wird die dem betreffenden Funktionsablauf definierende besondere Ziffernkombination bei dem nachfolgenden Verbindungsaufbau automatisch zu der zielkommunikationseinrichtung bzw. zu dem Kommunikationssystem übermittelt, das durch den Benutzer aufgrund der von ihm eingegebenen Wahlinformation bestimmt wurde. Für den Benutzer ist also in einem solchen Fall grundsätzlich eine Kenntnis dieser einzelnen besonderen Ziffernkombinationen nicht erforderlich. In den Fällen, in denen eine Anzeigeeinrichtung für den Benutzer nicht zur Verfügung steht, kann erfindungsgemäß auch vorgesehen sein, dass die jeweilige in der Regel mehrstellige besondere Ziffernkombination durch die Einwahl einer jeweils zugeordneten Kennzahl bestimmt ist. Grundsätzlich kann eine besondere Ziffernkombination individuell für einen Benutzer vorgegeben sein, oder sie kann auch für mehr als einen Benutzer im Grenzfall für sämtliche Benutzer, die unmittelbar Teilnehmer eines Kommunikationssystems sind, zentral abgespeichert werden. Diese besonderen Kennziffern sind dann in der Regel in mehreren Zielkommunikationseinrichtungen bzw. Zielkommunikationssystemen in gleicher Weise abgespeichert.

In den Fällen, in denen es die Art des in der Zielkommunikationseinrichtung eingeleiteten Funktionsablaufes erfordert, dass die Rufnummer des diesen Funktionsablauf bewirkenden externen Teilnehmers bekannt ist, kann gemäß einer Weiterbildung der Erfindung auf die Möglichkeit des ISDN-Protokolls zurückgegriffen werden, eine zweite Rufnummerninformation zu übermitteln (Subadresse). Es kann also dann erfindungsgemäß wie üblich, die tatsächliche Rufnummer des rufenden Teilnehmers übertragen werden, und die zu übermittelnde besondere Ziffernkombination wird im Rahmen der sogenannten 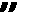 Subadresse" übertragen. Es kann auch die umgekehrte Zuordnung zwischen den beiden zu übertragenden Informationen festgelegt werden. Es muss dies nur in der Zielkommunikationseinrichtung in gleicher Weise definiert sein. Damit ist also in einfacher Weise in der Zielkommunikationseinrichtung zusätzlich anzeigbar, welcher Teilnehmer zum Beispiel eine angezeigte Textinformation bewirkt hat.

Abhängig von der Art des durch eine in der Zielkommunikationseinrichtung abgespeicherte Ziffernkombination bestimmten Funktionsablaufes, kann vorgesehen sein, dass eine Rufunterdrückung erfolgen soll.

Weitere vorteilhafte Ausgestaltungen der Erfindung sind den restlichen Unteransprüchen zu entnehmen.

Die Erfindung wird im Folgenden anhand eines figürlich dargestellten Ausführungsbeispiels erläutert. Im Ausführungsbeispiel ist als Ursprungskommunikationseinrichtung das Kommunikationssystem KS-A und als Ziekommunikationseinrichtung das Kommunikationssystem KS-B dargestellt, die jeweils mittels einer Anschlussleitung AL mit digitalem Protokoll an ein öffentliches Kommunikationssystem KN angeschlossen sind. Das Zielkommunikationssystem könnte beispielsweise ein sogenanntes kleines Kommunikationssystem (Heimkommunikationssystem) darstellen. Die beiden Kommunikationssysteme stimmen im Ausführungsbeispiel in ihrer jeweils schematisch dargestellten Grundstruktur überein. Es sind lediglich die zum Verständnis der Erfindung notwendigen Komponenten gezeigt, wobei die gleichartigen Komponenten in beiden Systemen mit dem gleichen Bezugszeichen versehen sind.

Zentraler Bestandteil eines jeden dieser beiden Kommunikationssysteme ist ein zentrales Koppelfeld KF, über das Endgeräte, von denen die Fernsprechendgeräte FE1 bis Fex bzw. FE1 bis FEy schematisch angedeutet sind, miteinander bzw. mit zu einem öffentlichen Kommunikationssystem KN führenden Leitung AL verbindbar sind. Über diese Leitung soll, wie dies bei sogenannten ISDN-Verbindungen der Fall ist, ein digitales Protokoll abgewickelt werden. Das zentrale Koppelfeld KF steht unter dem Steuereinfluss einer zentralen Systemsteuerung ST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Diese Aufgaben können grundsätzlich auch auf mehrere Prozessoren aufgeteilt werden. In jedem Kommunikationssystem sind Leitungsanschlusseinrichtungen, symbolisiert durch die Leitungsanschlusseinrichtung LT angeordnet. Diese werden vermittlungstechnisch durch die Systemsteuerung ST gesteuert. Hierbei ist jede Leitungsanschlusseinrichtung über einen Signalisierungskanal SK mit der Systemsteuerung verbunden. Über diesen Signalisierungskanal werden die Informationen, zum Beispiel mit Hilfe der bekannten HDLC-Übermittlungsprozedur ausgetauscht. Die in der Systemsteuerung gebildeten Taktsignale werden über eine Taktleitung TL an die Leitungsanschlusseinrichtungen LT verteilt. Diese Taktsignale werden durch eine mit dem Bezugszeichen TG symbolisierte Einheit geliefert. Die Peripherie eines jeden Kommunikationssystems wird jeweils ergänzt durch eine Signalisierungseinheit SE, die zur Zeichenversorgung des Systems vorhanden ist. Der zentrale Prozessor CPU der Systemsteuerung ST hat Zugriff zu den in der Speichereinrichtung SPE abgelegten Daten. Sie besteht grundsätzlich aus den Speicherteilen PROM und RAM. In dem Programmspeicherteil PROM sind unter anderem das Systembetriebsprogramm BS und die zu ihm bezüglich der Peripherietechnik, der Betriebstechnik, der Sicherheitstechnik und der Vermittlungstechnik VT gehörenden Programme abgespeichert. Durch die Programmkomponente BOF wird die sogenannte Benutzungsoberfläche repräsentiert. Die bezüglich der Vermittlungstechnik vorhandenen Programmkomponenten sind durch das Modul VT angedeutet, wobei durch das Bezugszeichen LM ein Modul bezeichnet wird, das symbolisch für die zur Realisierung der einzelnen Leistungsmerkmale vorhandenen Programmmodule steht.

Der Speicherteil RAM dient unter anderem der Aufnahme von temporären Daten zur Programmablaufsteuerung. Es werden in ihm auch Daten übernommen, die während eines durch ein Kommunikationsendgerät initiierten Verbindungsaufbaus oder bei der Inanspruchnahme eines Dienstes bzw. eines Leistungsmerkmals abgefragt werden. In dem Teilspeicherbereich KD sind grundsätzlich die Kundendaten, wie zum Beispiel die den einzelnen Endgeräten FE zugeteilten Berechtigungen und die Systemkonfiguration abgelegt. Bei einer Kommunikationsverbindung, der ein digitales Protokoll zugrundeliegt, kann, wie dies bei einer sogenannten ISDN-Verbindung der Fall ist, festgelegt sein, dass grundsätzlich in einem Protokollelement die vollständige Rufnummer des jeweils rufenden Endgerätes zum Ziel übertragen wird. Diese Rufnummer kann dann zum Beispiel dem gewünschten Gesprächspartner an der Endeinrichtung angezeigt werden.

Es besteht nun erfindungsgemäß die Möglichkeit, dass an Stelle dieser Rufnummer oder auch zusätzlich zu dieser Rufnummer eine vorab bestimmte Ziffernkombination, die von dieser Rufnummer abweicht, zum Ziel übertragen wird. Damit kann dann erreicht werden, dass an einem Endgerät der Zieleinrichtung beispielsweise des Kommunikationssystem KS-B eine bestimmte Textinformation angezeigt wird, oder dass auf Grund einer solchen übermittelten Ziffernkombination dort eine bestimmte Aktion bewirkt wird. Diese Übertragung erfolgt über die Leitungsschnittstelle LS, die beispielsweise einen ISDN-Teil beinhaltet, der als standardisierte SO-Schnittstelle ausgebildet sein kann.

Im Ausführungsbeispiel ist angedeutet, dass in dem Teilbereich S1 des Kundendatenspeichers KD in einem Speicherabschnitt S11 bestimmte Ziffernkombinationen ZK1 bis Zkn bzw. ZK11 bis ZK1m abgespeichert sind. Diese Abspeicherung kann beispielsweise durch einen berechtigten Teilnehmer zentral vorgenommen werden und ist für alle oder einen Teil der angeschlossenen Teilnehmer bestimmt. Grundsätzlich könnte auch eine teilnehmerindividuelle Abspeicherung einer oder mehrerer Ziffernkombinationen vorgenommen werden, wobei dann nur der betreffende Teilnehmer eine solche abgespeicherte Ziffernkombination zum bestimmungsgemäßen Gebrauch nutzen kann. Jeder abgespeicherten Ziffernkombination ist eine bestimmte Bedeutung zugeordnet. Diese Bedeutung kann beispielsweise darin bestehen, dass in einer fernen Zieleinrichtung bzw. in einem fernen Zielkommunikationssystem KS-B ein bestimmter Funktionsablauf und damit eine bestimmte Aktion AK bewirkt werden kann. Im Ausführungsbeispiel ist den abgespeicherten Ziffernkombinationen ZK1 bis Zkn die Aktion AK1 bis AKn zugeordnet. Den besonderen Ziffernombinationen ZK11 bis ZK1m soll jeweils eine Textinformation TE1 bis TEm zugeordnet sein. Bei der Übermittlung einer abgespeicherten Ziffernkombination ZK an eine ferne Zielstelle erfolgt dann dort die Durchführung der jeweils zugeordneten Aktion bzw. die Anzeige der jeweils zugeordneten Textinformation. Um dies zu ermöglichen, muss zunächst von dem betreffenden Teilnehmer, beispielsweise über das am Kommunikationssystem KS-A angeschlossenen Endgerät FE1, eine bestimmte Prozedur vorgenommen werden. Dies kann beispielsweise durch die Betätigung einer entsprechenden Funktionstaste und/oder die Einwahl einer bestimmten Kennzahl erfolgen. Anschließend können ihm bei Vorhandensein eines Displays DL die einzelnen Funktionsabläufe in einer entsprechenden Menüleiste angeboten werden. Diese Menüleiste ist beispielsweise im Abschnitt S12 des Kundendatenspeichers KD abgespeichert. Dieses darzustellende Menü beinhaltet einen Satz von Optionen, wobei diese einzelnen Optionen durch die Komponente 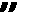 Benutzungsoberfläche" BOF für die Darstellung auf dem Display DL aufbereitet werden. Der Benutzer hat die Möglichkeit, sich beispielsweise durch die Betätigung einer Folgetaste FT, die nächste Option anzeigen zu lassen oder eine angezeigte Option durch die Betätigung einer Bestätigungstaste BT zu aktivieren. Die einzelnen Optionen werden dabei im Klartext angezeigt. Eine am jeweils gewünschten Ziel anzeigende Textinformation kann beispielsweise die Anzeige des Textes 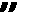 Bitte um Rückruf" darstellen. Die an einem fernen Ziel zu bewirkenden Funktionsabläufe bzw. Aktionen können beispielsweise Verbraucher betreffen. Die entsprechenden Menütexte enthalten zum Beispiel im Klartext die Angaben: Alarmanlage ein bzw. Alarmanlage aus, Rollladensteuerung aktivieren, Heizung bzw. Licht ein- bzw. ausschalten, Umleitung zur Voice Mail, PC einschalten.

Im Falle der Durchführung von Schaltaufträgen, die ein festes Ziel betreffen, könnten die jeweiligen Wahlziffern zum Erreichen dieses Zieles und die Ziffernkombination in Zuordnung zu der dazugehörigen Aktion fest abgespeichert sein. Für den Teilnehmer ist also die Kenntnis der einer Option zugeordneten und damit zu übertragenden speziellen Ziffernkombination nicht erforderlich. Um in einem solchen Fall das Kommunikationssytem KS-B zu erreichen, kann nach der Ortskennzahl und der sich daran anschließenden Anlagenkennzahl eine Durchwahlnummer übermittelt werden, die keinem physikalisch vorhandenem Anschluss entspricht. Die gesamte Rufnummer muss lediglich eine Stellenzahl aufweisen, aus der das Kommunikationssystem auf Grund der in ihm diesbezüglich implementierten Algorithmen erkennt, dass die Wahl vollständig ist. Im Zusammenhang mit dem auf Grund dieser jeweiligen Wahlinformation vorgenommenen Verbindungsaufbau zum Beispiel zum Zielkommunikationssystem KS-B wird die in Zuordnung zu der ausgewählten Option abgespeicherte spezielle Ziffernkombination übermittelt.

Sollte am Endgerät kein Display vorgesehen sein, so kann die Bestimmung der besonderen Ziffernkombination ZK, die übermittelt werden soll, auch durch die Einwahl einer vorbestimmten Indexzahl erfolgen. In einem solchen Fall ist dann jeder dieser abgespeicherten Ziffernkombinationen ZK11 bis ZK1m bzw. ZK1 bis ZKn eine Indexzahl Ind zugeordnet.

In den Fällen, in denen im Zielkommunikationssystem die Kenntnis desjenigen Teilnehmers erforderlich ist, der eine Aktion bzw. eine Anzeige einer Textinformation bewirkt hat, kann die im ISDN-Protokoll vorgesehene Möglichkeit des 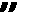 Subadressing" genutzt werden. Das bedeutet, dass in einem Protokollelement die vollständige Rufnummer des betreffenden Teilnehmers aus dem Ursprungskommunikationssystem und in einem anderen Protokollelement beispielsweise in Form einer derartigen Subadresse die vorbestimmte besondere Ziffernkombination übermittelt wird. Soll beispielsweise die einer solchen darzustellenden Textinformation zugeordnete Ziffernkombination, beispielsweise die Ziffernkombination ZK11 als Subadresse übertragen werden, so wird in Zuordnung zu dieser abgespeicherten Ziffernkombination eine die Verwendung einer solchen Subadresse charakterisierende Kennung SAd abgespeichert.

Grundsätzlich besteht auch die Möglichkeit, dass ein Teilnehmer, der über eine derartige vorbestimmte Ziffernkombination eine Textanzeige bzw. eine bestimmte Aktion im Zielkommunikationssystem auslösen will, die betreffende Ziffernkombination aktuell einwählt, die dann nach der Eingabe der das Zielkommunikationssystem bzw. eine Endeinrichtung in diesem System bestimmenden Wählziffern entsprechend übermittelt wird.

Anhand der besonderen Ziffernkombination, die entweder automatisch ermittelt oder durch den jeweiligen Benutzer bestimmt wird, erfolgt im Zielkommunikationssystem ein dadurch festgelegter Funktionsäblauf. Um dies zu ermöglichen, sind in der jeweiligen Zieleinrichtung bzw. im jeweiligen Zielkommunikationssystem diese besonderen Ziffernkombinationen ZK1 bis Zkn bzw. ZK11 bis ZK1m gleichfalls abgespeichert. In Zuordnung zu einer jeden Ziffernkombination wird zusätzlich eine Kennzeichnung des vermittels dieser empfangenen Ziffernkombination einzuleitenden Funktionsablaufs vorgenommen. Die im Ursprungskommunikationssystem KS-A auf Grund der besonderen Ziffernkombinationen ZK.festgelegten Funktionsabläufe können jeweils in einem oder auch in mehreren als Ziel vorgesehenen Kommunikationssystemen entweder insgesamt oder auch nur zum Teil bewirkt werden. Es sind dann die jeweiligen Ziffernkombinationen in dem betreffenden Zielkommunikationssystem gespeichert. Im Ausführungsbeispiel ist vorgesehen, dass sämtliche im Ursprungskommunikationssystem KS-A festgelegten Ziffernkombinationen im Zielkommunikationssystem KS-A äbgespeichert sind. Es könnten somit sämtliche ihnen jeweils zugeordnete Funktionsabläufe in Form von ganz bestimmten Aktionen oder in Form von Textanzeigen bewirkt werden.

Die in einem Protokollelement des beim Verbindungsaufbau verwendeten Protokolls enthaltene besondere Ziffernkombination wird nach der entsprechenden Registrierung im Zielkommunikationssystem KS-B daraufhin überprüft, ob sie mit einer der zum Beispiel in der Liste S des Kundendatenspeichers KD äbgespeicherten Ziffernkombinationen übereinstimmt. Trifft dies zu, so wird über die jeweils zugeordnete Kennung des Funktionsablaufes das für die Realisierung dieses Ablaufes vorgesehene Programmmodul aufgerufen.

Ein Teilnehmer, beispielsweise der Benutzer des Endgerätes FE1 des Kommunikationssystems KS-A aktiviert auf Grund der vorgegebenen Prozedur das erfindungsgemäße Leistungsmerkmal, mit dem in einem fernen Ziel ganz bestimmte Funktionsabläufe veranlasst werden können. Daraufhin werden ihm bei einer Darstellung in Form einer Menüleiste die einzelnen Möglichkeiten im Display DL nacheinander angeboten. Mittels der Fortschaltetaste FT kann er das von ihm gewünschte Merkmal auswählen. Entscheidet er sich beispielsweise für 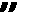 Alarmanlage ein" und bestätigt seine Auswahl mit der Bestätigungstaste BT, dann wird die zugeordnete besondere Ziffernkombination in das Protokollelement, das für die Übertragung von Ziffernfolgen vorgesehen ist, aufgenommen. Für den Fall, dass das gewünschte Ziel bereits in dem Ursprungskommunikationssystem abgespeichert ist, baut es eine Verbindung zum Zielkommunikationssystern automatisch auf und quittiert die entsprechende Aktivierung. Es kann auch der Fall sein, dass lediglich die Rufnummer des Zielkommunikationssystems bzw. einer Zieleinrichtung als solcher abgespeichert wird, und dass eine Zielnachwahl erforderlich sein soll. Diese Tatsache wird dem jeweiligen Benutzer ebenfalls über das Display DL seines Endgerätes angezeigt. Nach Eingabe der die Zielrufnummer vervollständigenden Nachwahlziffern wird ein entsprechender Belegungswunsch vermittels des peripherieorientierten Moduls DH in Form einer entsprechenden Meldung (Setup-Meldung) an das öffentliche Kommunikationssystem KN übermittelt. Über dieses trifft dann diese Meldung im Zielkommunikationssystem KS-B ein und wird der Komponente 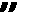 Benutzungsoberfläche" BOF über die peripher orientierte Komponente DH (Device Handler) mitgeteilt. Es wird grundsätzlich die in dem Protokollelement enthaltene Ziffernkombination mit den in der Liste S abgespeicherten Ziffernkombinationen verglichen. Ist dem gewünschten Funktionsablauf (Alarmanlage ein) zum Beispiel die Ziffernkombination ZK1 zugeordnet, so wird die Übereinstimmung festgestellt. Der abgespeicherten Ziffernkombination ZK1 ist im Kundendatenspeicher des Zielkommunikationssystems eine Kennung K-AK1 zugeordnet, über die der betreffende Funktionsablauf definiert ist. Das hat zur Folge, dass durch die Steuerung ein Programmmodul P1 aufgerufen wird. Mit den in ihm enthaltenen Abläufen wird dann der Funktionsablauf 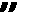 Alarmanlage ein" realisiert. Für die gewünschte Funktion kann ein Relais RL angesteurt werden. Über seinen damit aktivierten sekundären Steuerkreis SK wird dann die gewünschte Aktion bewirkt. Über derartige andere Relais können dann noch weitere Steuerfunktionen verwirklicht werden. Würde beispielsweise vom betreffenden Teilnehmer die besondere Ziffernfolge ZKn übermittelt werden, so wird über die entsprechend zugeordnete Kennzahl K-AKn zum Beispiel das Programmmodul P2 aufgerufen. Die in ihm enthaltenen Anweisungen sollen zum Beispiel den Zugriff auf eine ISDN-Personalcomputerkarte ermöglichen. Eine entsprechende Anwendung wertet die in einem solchen Fall vom Benutzer individuell bestimmte besondere Ziffernkombination aus und aktiviert daraufhin zum Beiispiel das Starten einer Backup-Software im PC.

Es kann beispielsweise auch vorgesehen sein, dass auf Grund einer übermittelten besonderen Ziffernkombination ZK... im Zielkommunikationssystem KS-B eine Textinformation auf dem Display eines Teilnehmers angezeigt werden soll. Bei einer festen Zuordnung zu einem rufenden Teilnehmer könnte die vollständige Rufnummer des gewünschten Teilnehmers im Zielkommunikationssystem vorab abgespeichert worden sein. Es kann auch vorgesehen werden, dass bei der ISDN-Verbindung diese Rufnummer wie üblich in dem dafür vorgesehenen Protokollelement enthalten ist, und die besondere Ziffernkombination, die den jeweiligen Funktionsablauf definiert, in der sogenannten Subadresse enthalten ist. Aus dem Ursprungskommunikationssystem wird beispielsweise die gesonderte Ziffernkombination ZK11 übertragen, die die Textinformation TE1 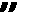 Bitte um Rückruf" bewirken soll. Da sie in der Liste S des Zielkommunikationssystems KS-B abgespeichert ist, wird über die zugeordnete Kennung K-TE1 durch die Steuerung eines Programmmoduls P3 aufgerufen. Dadurch wird bewirkt, dass die entsprechend abgespeicherte Textinformationen auf dem Display DL des Teilnehmers FEy angezeigt wird. Das gewünschte Endgerät, auf dessen Display eine Textinformation angezeigt werden soll, wird vom rufenden Teilnehmer durch die Eingabe der entsprechenden Wählinformationen bestimmt. Die Rufnummer zum Erreichen des Zielkommunikationssystems kann auch bereits individuell für einen bestimmten rufenden Teilnehmer im Ursprungskommunikationssystem abgespeichert sein. Der gewünschte Teilnehmer, für den eine Textinformation angezeigt werden soll, wird dann durch Nachwahl bestimmt. Es kann festgelegt sein, dass insbesondere bei der Anzeige von Textinformationen der Ruf des betreffenden Endgerätes unterdrückt wird. Dies kann durch eine entsprechende Kennung KR, die in Zuordnung zu der besonderen Ziffernkombination z.B. ZK11 abgespeichert ist, definiert werden.

Insbesondere in den Fällen, in denen das Ziel eine sogenannte Heimkommunikationsanlage bzw. eine an einem Einzelanschluss angeschaltete Einrichtung darstellt, können für die einzelnen besonderen Ziffernkombinationen, die in einem solchen Fall individuell einem bestimmten Teilnehmer im Ursprungskommunikationssystem zugeordnet sind, die notwendigen Wahlinformationen dauerhaft abgespeichert sein.

Die im Zielkommunikationssystem empfangsseitig vorgesehenen Funktionen zur Durchführung einer von extern bewirkten Aktion bzw. eines Funktionsablaufes, können auch im Ursprungskommunikationssystem in gleicher Weise vorhanden sein. Im Zusammenhang mit kommenden Rufen für das Kommunikationssystem KS-A können dann in gleicher Weise wie für das Kommunikationssystem KS-B beschrieben, Aktionen bzw. Funktionsabläufe bewirkt werden.

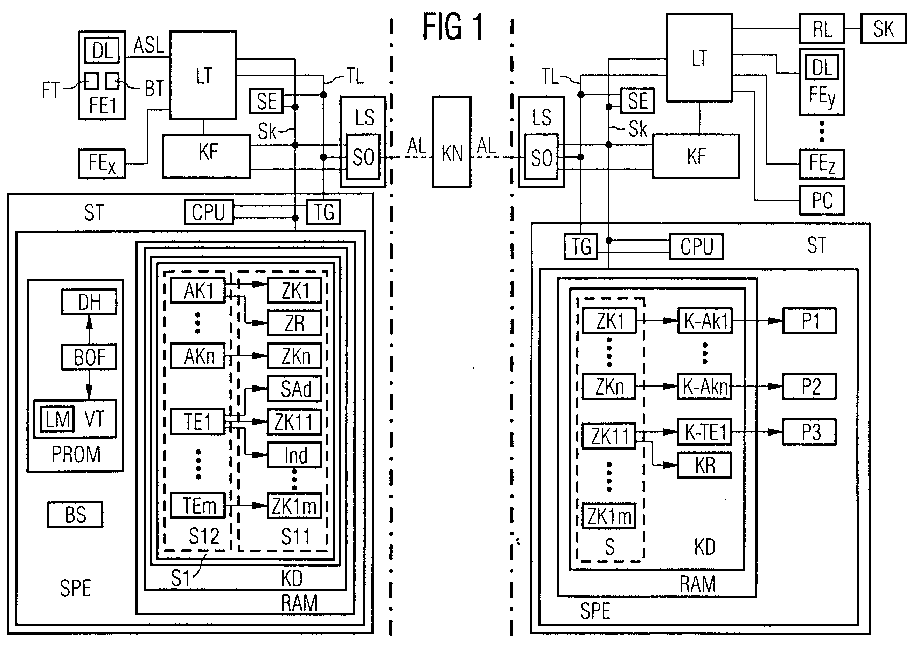

## Patentansprüche

1. Verfahren zum Betrieb von programmgesteuerten Kommunikationseinrichtungen, die über eine neben wenigstens einem Sprachkanal einen Datenkanal unterstützende Schnittstelle als Ursprung bzw. Ziel einer Kommunikationsverbindung aufgrund der Eingaben eines Benutzers mittelbar über eine Anschlussleitung verbindbar sind, wobei im Zusammenhang mit dem Aufbau der Kommunikationsverbindung zusätzlich zu der eigentlichen Wahlinformation eine vorbestimmte Ursprungsziffernfolge als Teil des Übertragungsprotokolls automatisch zur Zielkommunikationseinrichtung übermittelt wird,
**dadurch gekennzeichnet,**
dass in der Ursprungskommunikationseinrichtung wenigstens eine von der vollständigen Anschlussrufnummer abweichende besondere Ziffernkombination eingebbar ist, daß diese besondere Ziffernkombination aufgrund einer vom Benutzer vorgenommenen spezifischen Diensteprozedur im Rahmen des einem Verbindungsaufbau zugrundeliegenden Protokolls automatisch als Ursprungsziffernkombination zu einer Zielkommunikationseinrichtung übertragen wird, dass in bestimmten Zielkommunikationseinrichtungen jede dieser besonderen Ziffernkombinationen (ZK1...ZKn;ZK11...ZK1m) ebenfalls abgespeichert sind und dass jeder Ziffernkombination (ZK1) ein durch sie definierter Funktionsablauf (AK1) zugeordnet ist, daß jede abgespeicherte Ziffernkombination mit der jeweils beim Verbindungsaufbau übermittelten besonderen Ziffernkombination auf Übereinstimmung geprüft wird, und dass bei einer festgestellten Übereinstimmung der jeweils zugeordnete Funktionsablauf bewirkt wird.

2. Verfahren nach Anspruch 1,
**dadurch gekennzeichnet,**
dass die unterschiedlichen Funktionsabläufe in der Zielkommunikationseinrichtung benutzerorientierte und/oder einrichtungsorientierte Aktionen repräsentieren.

3. Verfahren nach Anspruch 1,
**dadurch gekennzeichnet,**
dass der definierte Funktionsablauf in der Beeinflussung eines Schaltmittels (RL) besteht, das seinerseits die Wirksamschaltung oder Unwirksamschaltung eines Verbrauchers steuert.

4. Verfahren nach Anspruch 1,
**dadurch gekennzeichnet,**
dass die Ziel- bzw. Ursprungskommunikationseinrichtung jeweils an einem mit den öffentlichen Kommunikationssystem verbundenen Einzelanschluß mit digitalem Protokoll gekoppelte Endeinrichtung darstellt oder jeweils eine derart geartete Endeinrichtung und ein privates Kommunikationssystem mit entsprechenden daran angeschlossenen Endgeräten darstellt.

5. Verfahren nach Anspruch 1,
**dadurch gekennzeichnet,**
dass die Zielkommunikationseinrichtung und die Ursprungskommunikationseinrichtung jeweils ein Kommunikationssystem, insbesondere ein sogenanntes kleines Kommunikationssystem darstellt, wobei vorzugsweise die besondere Ziffernkombination zumindest mit der Systemrufnummer des Ursprungskommunikationssystems beginnt.

6. Verfahren nach Anspruch 4 oder 5,
**dadurch gekennzeichnet,**
dass die einzelnen besonderen Ziffernkombinationen in der Ursprungskommunikationseinrichtung dauerhaft abgespeichert sind und dass der einer jeden Ziffernkombination zugeordnete Funktionsablauf im Sinne einer aufrufbaren Menüfunktion nacheinander auf einer Anzeigeeinrichtung (DL) einer Endeinrichtung (FE1) für den Benutzer im Klartext benennbar ist und bei Betätigung einer Bestätigungstaste (BT) die den betreffenden Funktionsablauf definierende besondere Ziffernkombination automatisch zu dem durch den Benutzer aufgrund der von ihm eingegebenen Wahlinformation festgelegten Zielkommunikationseinrichtung übermittelt wird.

7. Verfahren nach Anspruch 4 oder 5,
**dadurch gekennzeichnet,**
dass die besondere Ziffernkombination in der Ursprungskommunikationseinrichtung (KS-A) in Zuordnung zu einer Kennzahl fest abgespeichert ist, dass bei der durch den Benutzer vorgenommene Eingabe einer solchen Kennzahl die jeweils einen bestimmten Funktionsablauf definierende Ziffernkombination zu der durch die vom Benutzer eingegebene Wahlinformation festgelegten Zielkommunikationseinrichtung (KS-B) übermittelt wird.

8. Verfahren nach einem der vorhergehenden Ansprüche,
**dadurch gekennzeichnet,**
dass die einen gewünschten Funktionsablauf (AK1) in der Zielkommunikationseinrichtung (KS-B) definierende Ziffernkombination (ZK1) in unmittelbarem Zusammenhang mit der Verbindungsherstellung zur Zielkommunikationseinrichtung (KS-B) durch den Benutzer in der Ursprungskommunikationseinrichtung aktuell eingebbar ist, daß diese jeweilige Ziffernkombination (ZK1) im Zuge des Verbindungsaufbaus zur Zielkommunikationseinrichtung übermittelt wird.

9. Verfahren nach einem der vorhergehenden Ansprüche 1 bis 8,
**dadurch gekennzeichnet,**
daß in den Fällen, in denen im Protokoll eine weitere Nummerninformation als Subadresse übertragbar ist, diese Subadresse die besondere Ziffernkombination betrifft, und dass dieandere übertragbare Rufnummerninformation die Rufnummer des betreffenden rufenden Teilnehmers darstellt, so dass diese in der Zielkommunikationseinrichtung insbesondere bei einer benutzerorientierteen Aktion (Anzeige einer Textinformation) zusätzlich anzeigbar ist.

10. Verfahren nach einem der vorhergehenden Ansprüche,
**dadurch gekennzeichnet,**
daß in der Zielkommunikationseinrichtung (KS-B) in Zuordnung zu der abgespeicherten besonderen Ziffernkombination (Z11) zusätzlich eine Kennung (KR) abgespeichert ist, durch die festgelegt wird, daß eine Rufunterdrückung erfolgen soll.

11. Verfahren nach einem der vorhergehenden Ansprüche 1 bis 8,
**dadurch gekennzeichnet,**
dass bei Übermittlung einer besonderen Ziffernkombination (ZK11) mit der in der Zielkommunikationseinrichtung ((KS-B) eine benutzerorientierte Aktion (K-TE1) bewirkt wird, diese Zielkommunikationseinrichtung ohne den die gewünschte Endeinrichtung definierenden Ruufnummernteil angewählt wird und daß dieser Rufnummernteil zusätzlich in unmittelbarer Zuordnung zu der betreffenden Ziffernkombination (ZK11) abgespeichert ist, so dass das gewünschte Endgerät damit definiert ist.

12. Verfahren nach einem der vorhergehenden Ansprüche 1 bis 9,
**dadurch gekennzeichnet,**
dass zumindest in den Fällen, in denen eine einrichtungsorientierte und/oder systemorientierte Aktion erfolgen soll, die jeweils übermittelte besondere Ziffernkombination (ZK1) sich aus dem die Ursprungskommunikationseinrichtung charakterisierenden Rufnummernteil (Ortsnetzkennzahl und anschließenden Systemkennzahl) und aus einer nachfolgenden frei definierbaren, mindestens einer Ziffer, zusammensetzt, so dass im öffentlichen Kommunikationssystem (KN) die übliche Plausibilitätsprüfung bezüglich des Ursprungs vorgenommen werden kann.

13. Anordnung zur Durchführung des Verfahrens nach einem der vorhergehenden Ansprüche,
**dadurch gekennzeichnet,**
dass sowohl die Ziel- als auch die Ursprungskommunikationseinrichtung eine Steuerung aufweist, der ein das Verfahren definierendes Programm zugeordnet ist.
